# FASCICULE DE BREVET EUROPEEN

(11) **EP 1 819 759 B1**
(45) Date de publication et mention de la délivrance du brevet: **09.02.2011**
(21) Numéro de dépôt: 05824401.3
(22) Date de dépôt: 07.12.2005
(51) Int. Cl.: C08J 9/20, C08J 9/28, B01J 13/00, B01J 13/02, B01J 13/12, B01J 13/20, H05H 6/00

(54) **PROCEDE ET DISPOSITIF DE FABRICATION DE BILLES OU DE BALLONS EN MOUSSE POLYMERE**
VERFAHREN UND VORRICHTUNG ZUR HERSTELLUNG VON POLYMERSCHAUMKÜGELCHEN ODER -BALLONS
METHOD AND DEVICE FOR MAKING POLYMER FOAM BEADS OR BALLOONS

(30) Priorité: 10.12.2004 FR 0452929
(43) Date de publication de la demande: 22.08.2007
(73) Titulaire: Commissariat à l'Énergie Atomique et aux Énergies Alternatives, 75015 Paris (FR)
(72) Inventeur: GUILLOT, Lyonel, F-21240 Talant (FR); VEDRENNE, Patrick, F-21000 Dijon (FR); ETHEVE, Jocelyne, F-97434 Saint Gilles Les Bains (FR)
(74) Mandataire: Poulin, Gérard
(86) Numéro de dépôt international: PCT/FR2005/051050
(87) Numéro de publication internationale: WO 2006/061544

(56) Documents cités:
- US-A- 4 133 854
- US-A- 4 224 261
- US-A- 5 430 776

## Description

### DOMAINE TECHNIQUE

L'invention se rapporte à un procédé de fabrication de billes ou de ballons en mousse polymère, ainsi qu'à un dispositif spécialement conçu pour mettre en oeuvre ce procédé.

Dans ce qui suit et ce qui précède, on entend par "bille", une sphère ou une quasi sphère pleine, tandis qu'on entend par "ballon", une sphère ou une quasi sphère comportant une cavité centrale limitée par une paroi.

Le procédé conforme à l'invention permet, en particulier, de fabriquer avec un rendement élevé des *"microballons" -* c'est-à-dire des ballons d'un diamètre de quelques centaines de micromètres à plusieurs millimètres - en mousse polymère aux caractéristiques géométriques (taille, circularité, concentricité, ...) parfaitement contrôlées et présentant des tailles de porosité inférieures au micromètre.

Ces microballons sont notamment utiles dans le domaine de la physique des plasmas, et en particulier pour la réalisation de cibles pour l'étude de la fusion par confinement inertiel, mais ils peuvent également être utilisés dans d'autres domaines comme, par exemple, la fabrication de matrices pour des synthèses en phase solide, pour l'immobilisation spécifique d'éléments biologiques du type protéines, ou encore pour l'exécution de tests biologiques à haut débit.

### ÉTAT DE LA TECHNIQUE ANTÉRIEURE

Pour la réalisation de cibles pour l'étude des phénomènes de fusion par confinement inertiel, il est connu d'utiliser des microballons en mousse polymère mesurant un ou plusieurs millimètres de diamètre et présentant une épaisseur de paroi de l'ordre de 30 à 500 microns, que l'on remplit ensuite de deutérium ou d'un mélange de deutérium et de tritium par perméation à travers leur paroi.

Ces microballons doivent répondre à un certain nombre d'exigences et présenter, en particulier, une circularité (ou sphéricité) et une concentricité les plus parfaites possibles.

La voie la plus classique de fabrication de ces microballons consiste à former, dans un premier temps, ces microballons sous une forme liquide, en encapsulant une première phase aqueuse dans une phase organique renfermant à la fois un monomère réticulable et un amorceur de polymérisation, puis à mettre les microballons liquides ainsi formés en suspension dans une seconde phase aqueuse, sous agitation, le temps nécessaire pour obtenir la solidification de la phase organique par polymérisation du monomère présent dans cette phase et réticulation du polymère résultant.

Après séparation des microballons de la seconde phase aqueuse, la première phase aqueuse encapsulée dans la phase organique est remplacée par un solvant plus volatile que l'eau qui est, à son tour, éliminé par une opération de séchage, laissant la place à de l'air.

L'une des difficultés posées par cette voie de fabrication tient à l'instabilité de l'émulsion formée par les microballons liquides en suspension dans la seconde phase aqueuse. Cette émulsion tend, en effet, à se dégrader, notamment par des mécanismes de coalescence, de floculation et de sédimentation, avant que la phase organique des microballons n'ait eu le temps de gélifier, ce qui conduit à la formation d'agglomérats de microballons qui sont inutilisables par la suite, et ce qui grève notablement le rendement de fabrication de ces microballons.

Jusqu'à présent, toutes les méthodes proposées pour stabiliser ce type d'émulsion font appel à des additifs chimiques. Ainsi, par exemple, M. Tagaki et al. (J. Vac. Sci. Technol. A, 9, 820, 1991) ont recours à des surfactants qu'ils incorporent dans chacune des phases aqueuses et organique.

Or, dans le cadre de leurs travaux, les inventeurs ont constaté qu'en soumettant une émulsion du type décrit ci-dessus à un traitement thermique dans des conditions convenablement choisies, aussitôt après la formation de cette émulsion, il est possible de réduire suffisamment le temps de gélification de la phase organique des microballons liquides pour que cette gélification survienne avant que les mécanismes de dégradation de l'émulsion n'aient eu le temps de démarrer. On supprime ainsi tout risque d'agglomération des microballons liquides entre eux.

Une fois la phase organique des microballons gélifiée, la solidification de cette phase et, partant, des microballons eux-mêmes peut alors être achevée de façon conventionnelle.

C'est sur cette constatation qu'est basée la présente invention.

### EXPOSÉ DE L'INVENTION

L'invention a donc, en premier lieu, pour objet un procédé de fabrication de billes ou de ballons en mousse polymère, qui comprend les étapes suivantes :
a) former des billes liquides avec une phase organique, ou des ballons liquides par encapsulation d'une phase aqueuse W₁ dans une phase organique, cette phase organique comprenant au moins un monomère réticulable et un amorceur de polymérisation en solution dans un solvant organique non miscible à l'eau ;
b) former une émulsion en mettant les billes ou les ballons liquides en suspension dans une phase aqueuse W₂ ;
c) soumettre l'émulsion ainsi formée à une température θ qui est au moins égale à la température à laquelle l'amorceur de polymérisation présente un temps de demi-vie de décomposition de 5 à 15 minutes, mais qui est inférieure à la température de dégradation de la phase organique, le temps nécessaire pour obtenir la gélification de cette phase organique ; et
d) achever la solidification de la phase organique desdites billes ou desdits ballons.

Ainsi, conformément à l'invention, la température θ à laquelle on soumet l'émulsion formée par les billes ou les ballons liquides en suspension dans la phase aqueuse W₂ est :
- au moins égale à la température à laquelle l'amorceur de polymérisation présent dans la phase organique de ces billes ou ballons a un temps de demi-vie de décomposition de 5 à 15 minutes, tout en étant
- inférieure à la température à laquelle est susceptible de se dégrader cette phase organique.

Une telle température permet de déclencher très rapidement la polymérisation et la réticulation du monomère réticulable présent dans la phase organique des billes ou des ballons liquides, et d'obtenir la gélification de cette phase avant que les mécanismes de dégradation de l'émulsion formée par ces billes ou ballons en suspension dans la phase aqueuse W₂ n'aient eu, eux, le temps de débuter.

Par *"monomère réticulable",* on entend un monomère polyfonctionnel apte à former des chaînes polymères par polymérisation, puis à former un réseau tridimensionnel par formation de ponts entre ces chaînes polymères, éventuellement par l'intermédiaire d'un agent de réticulation.

Par *"température de dégradation de la phase organique",* on entend la température à laquelle au moins l'un des éléments constitutifs de la phase organique des billes ou des ballons autres que l'amorceur de polymérisation, est susceptible de se dégrader et de provoquer ainsi une dégradation de cette phase organique dans son ensemble.

Il est à noter que les temps de demi-vie de décomposition des amorceurs de polymérisation en solution dans les solvants ainsi que leurs variations en fonction de la température font partie des informations techniques disponibles auprès des fournisseurs de ce type de produits. Ainsi, par exemple, la société WAKO Pure Chemical Industries, Ltd, qui offre une large gamme d'amorceurs de polymérisation, met à la disposition de ses clients des diagrammes qui permettent de déterminer les températures auxquelles ces amorceurs présentent des temps de demi-vie de 5 à 15 minutes.

Par ailleurs, les températures de dégradation des autres constituants de la phase organique des billes ou des ballons liquides sont, elles, disponibles dans les catalogues des fournisseurs ou dans des ouvrages répertoriant les produits chimiques comme, par exemple, le MERCK Index.

Il en résulte que la gamme des températures θ susceptibles d'être utilisées au cours de l'étape c) peut aisément être déterminée.

Conformément à l'invention, l'étape c) du procédé est, de préférence, réalisée en faisant circuler l'émulsion dans un conduit chauffé à la température θ.

Selon une première disposition avantageuse du procédé conforme à l'invention, à l'étape b), les billes ou les ballons liquides sont mis en suspension dans la phase aqueuse W₂ tout en étant séparés les uns des autres par un volume de phase aqueuse W₂ les empêchant d'entrer en contact les uns avec les autres.

De même, à l'étape c), les billes ou les ballons liquides sont avantageusement maintenus séparés les uns des autres par un volume de phase aqueuse W₂ propre à prévenir tout contact entre ces billes ou ces ballons liquides.

On supprime ainsi toute possibilité d'interaction entre les billes ou les ballons liquides aussi longtemps que la phase organique n'a pas gélifié.

En pratique, pour mettre en oeuvre ces dispositions, l'invention prévoit :
- de former, à l'étape a), les billes ou les ballons liquides en ordre successif au niveau de l'orifice de sortie d'un système d'injection ; puis
- de mettre, à l'étape b), ces billes ou ces ballons liquides en suspension dans la phase aqueuse W₂ en les arrachant de l'orifice de sortie de ce système d'injection, au fur et à mesure de leur formation, au moyen d'un flux de phase aqueuse W₂ de débit constant ; et
- de réaliser l'étape c) en faisant circuler l'émulsion résultant de l'arrachage des billes ou des ballons liquides par le flux de phase aqueuse W₂ dans un conduit chauffé à la température θ.

Selon une autre disposition avantageuse du procédé conforme à l'invention, l'étape d) est réalisée dans un récipient dans lequel se déverse l'émulsion après avoir parcouru ledit conduit.

En effet, une fois la phase organique gélifiée, les billes ou les ballons peuvent être réunis dans un récipient commun et la solidification de cette phase peut être poursuivie et achevée en les maintenant dans ce récipient sous une simple agitation.

Conformément à l'invention, le procédé comprend de plus, après l'étape d), une étape de lavage des billes ou des ballons, par exemple avec de l'eau salée, et une étape de séchage des billes ou des ballons ainsi lavés.

De préférence, on intercale, entre les étapes de lavage et de séchage, une étape consistant à remplacer le solvant organique présent dans la paroi des billes ou des ballons et, dans le cas de ballons, la phase aqueuse W₁ présente dans ces ballons, par un solvant plus volatile que l'eau, ce solvant étant plutôt un alcool et, en particulier, l'éthanol.

Dans tous les cas, le séchage des billes ou des ballons est, de préférence, réalisé au CO₂ supercritique.

Si l'on souhaite obtenir des billes ou des ballons présentant des propriétés de circularité et, dans le cas de ballons, de concentricité les plus parfaites possibles, il est nécessaire de contrôler les densités des différentes phases aqueuse(s) et organique.

Ainsi, pour une bonne circularité, il convient que la densité de la phase aqueuse W₂ soit relativement proche de la densité apparente des billes ou des ballons liquides, c'est-à-dire de la densité de la phase organique dans le cas de billes, et de la densité de l'ensemble formé par la phase organique et la phase aqueuse W₁, tout en étant supérieure à cette densité apparente, sous peine de ne pas obtenir d'émulsion.

De manière analogue, pour une bonne concentricité, il convient que la densité de la phase organique soit supérieure, tout en étant peu différente, à la densité de la phase aqueuse W₁.

Aussi, conformément à l'invention, préfère-t-on que la phase aqueuse W₂ présente une densité supérieure de 1% au plus à la densité apparente des billes ou ballons liquides et que, dans le cas de la fabrication de ballons, la phase organique présente une densité supérieure de 1% au plus à la densité de la phase aqueuse W₁.

Les constituants de la phase aqueuse W₂, de la phase organique et, dans le cas de la fabrication de ballons, de la phase aqueuse W₁, ainsi que leurs proportions respectives, sont donc choisis en conséquence.

Selon encore une autre disposition avantageuse du procédé conforme à l'invention, le ou les monomères réticulables présents dans la phase organique sont des monomères à polymérisation radicalaire, auquel cas ils sont avantageusement choisis parmi les acrylates et les méthacrylates multifonctionnels. Il peut s'agir notamment du triacrylate de triméthylolpropane (TMPTA), du triacrylate de pentaérythrol (PETA), du triméthacrylate de triméthylolpropane (TMPTMA), du triacrylate de triméthylolpropane éthoxylate, du triacrylate de triméthylolpropane propoxylate ou du diacrylate de tripropylène glycol, le TMPTMA étant particulièrement préféré.

D'autres types de monomères réticulables sont également susceptibles de convenir comme, par exemple, des monomères styréniques : divinylbenzène, trivinylbenzène, divinylnaphtalène, divinylalkylbenzène et analogues.

Dans ce cas également, l'amorceur de polymérisation est, de préférence, choisi parmi les amorceurs de polymérisation radicalaire de type azo solubles dans les solvants organiques comme, par exemple, l'α,α'-azobis isobutyronitrile ou le 2,2'-azobis (4-méthoxy-2,4-diméthylvaléronitrile).

Le procédé conforme à l'invention présente de nombreux avantages.

En effet, il permet de fabriquer avec un haut rendement des billes ou des ballons en mousse polymère présentant une structure très homogène et aux caractéristiques géométriques, et notamment de circularité et, dans le cas de ballons, de concentricité, parfaitement contrôlées.

A ce titre, il est particulièrement bien adapté à la fabrication de microballons en mousse polymère destinés à entrer dans la constitution de cibles pour l'étude de la fusion par confinement inertiel.

Le procédé conforme à l'invention présente, de plus, l'avantage de pouvoir être mis en oeuvre au moyen d'un dispositif relativement simple et peu onéreux.

L'invention a donc, aussi, pour objet un dispositif spécialement conçu pour la mise en oeuvre d'un procédé tel que précédemment défini, ce dispositif comprenant :
- un système d'injection comportant une ou plusieurs entrées pour son alimentation en phase organique et éventuellement en phase aqueuse W₁, et un orifice de sortie pour la formation des billes ou des ballons liquides ;
- une chambre fermée dans laquelle est logé l'orifice de sortie du système d'injection, cette chambre comportant une ou plusieurs entrées pour son alimentation en phase aqueuse W₂ et une sortie pour l'évacuation hors de cette chambre de l'émulsion résultant de la mise en suspension des billes ou des ballons liquides dans cette phase aqueuse W₂ ;
- un serpentin pour soumettre l'émulsion à la température θ, ce serpentin comportant une entrée reliée à la sortie de la chambre et une sortie, et étant muni de moyens de chauffage ; et
- des moyens pour réceptionner l'émulsion à la sortie dudit serpentin.

Selon une première disposition avantageuse de ce dispositif, la sortie de la chambre est constituée par une tubulure dont une extrémité est située en regard et à proximité de l'orifice de sortie du système d'injection et dont l'autre extrémité est reliée au serpentin.

Selon une autre disposition avantageuse de ce dispositif, le serpentin est formé par un tube enroulé en spirale autour d'un axe vertical, et dont les spires, sont, de préférence, jointives.

Selon encore une autre disposition avantageuse de ce dispositif, le serpentin est logé dans une enceinte fermée munie d'une entrée et d'une sortie pour son alimentation en un fluide caloporteur propre à assurer le chauffage de ce serpentin.

De préférence, le serpentin et l'enceinte dans laquelle il est logé sont en verre.

L'invention sera mieux comprise à la lecture du complément de description qui suit, qui se rapporte à un exemple de dispositif permettant de réaliser des microballons en mousse polymère par le procédé conforme à l'invention, ainsi qu'à un exemple de mise en oeuvre du procédé conforme à l'invention pour la réalisation de microballons en mousse polymère au moyen de ce dispositif, et qui se réfère aux dessins annexés.

Il va de soi que ces exemples ne sont donnés qu'à titre d'illustrations de l'invention et n'en constituent en aucune manière une limitation.

### BRÈVE DESCRIPTION DES DESSINS

La figure 1 représente schématiquement un exemple de dispositif permettant de réaliser des microballons en mousse polymère par le procédé conforme à l'invention.
La figure 2 représente une image prise avec une caméra CCD montrant la formation d'un microballon liquide au cours du procédé conforme à l'invention.
La figure 3 représente, sous la forme d'un histogramme, la distribution de microballons en mousse polymère réalisés par le procédé conforme à l'invention en fonction de leur diamètre, exprimé en microns.
La figure 4 représente la courbe d'écart à la circularité de microballons en mousse polymère réalisés par le procédé conforme à l'invention.
La figure 5 représente deux images de radiographie aux rayons X montrant la paroi d'un microballon en mousse polymère réalisé par le procédé conforme à l'invention, la partie A correspondant à un grossissement de 4 X et la partie B correspondant à un grossissement de 10 X.
La figure 6 représente trois images, prises au microscope électronique à balayage à un grossissement de 40 000 X, d'un microballon en mousse polymère réalisé par le procédé conforme à l'invention, la partie A correspondant à une vue de la surface externe de la paroi de ce microballon, la partie B correspondant à une vue de la paroi à la limite avec la surface interne (partie supérieure gauche de l'image), et la partie C correspondant à la surface interne de cette paroi.

### EXEMPLES

### Exemple 1 :

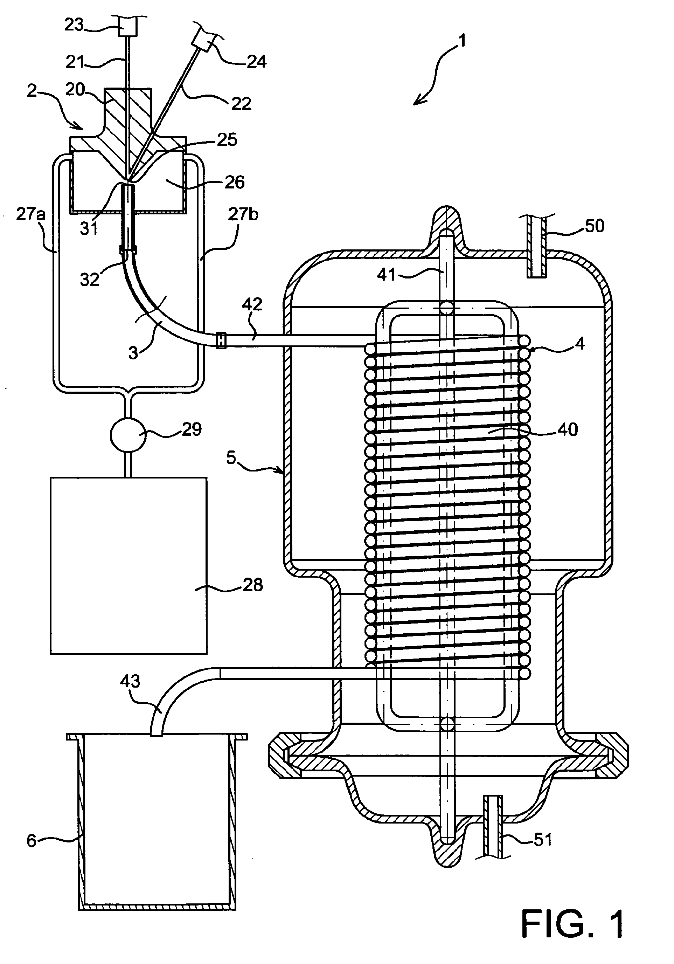

On se réfère tout d'abord à la figure 1 qui représente schématiquement un exemple de dispositif permettant de réaliser des microballons en mousse polymère par le procédé conforme à l'invention.

Comme visible sur cette figure, ce dispositif, qui est référencé 1, comprend principalement un injecteur triphasique 2, un serpentin 4 qui est relié à cet injecteur par l'intermédiaire d'un raccord 3 et qui est logé dans une enceinte fermée 5, et un récipient 6.

L'injecteur triphasique 2 comprend, en premier lieu, un système d'injection 20 dont la fonction est d'assurer, en condition opératoire, la formation des microballons liquides par encapsulation d'une phase aqueuse W₁ dans une phase organique contenant au moins un monomère multifonctionnel et un amorceur de polymérisation.

Ce système d'injection, qui peut être réalisé d'une façon quelconque connue de l'homme du métier spécialisé dans l'encapsulation d'une phase liquide dans une autre phase liquide, comprend au moins deux capillaires 21 et 22 dont une extrémité est reliée à un système, respectivement 23 et 24, permettant d'alimenter ces capillaires, de façon continue et à débit constant, avec une phase aqueuse W₁ pour le premier, et une phase organique pour le second, tandis que leur autre extrémité débouche sur un orifice commun de sortie 25 au niveau duquel se forment les microballons liquides.

Comme moyens d'alimentation des capillaires 21 et 22, on peut notamment utiliser des seringues, par exemple des seringues à gaz, dont on règle le débit au moyen d'un pousse seringue.

L'injecteur triphasique 2 comporte, aussi, une chambre fermée 26 qui est située juste au-dessous du système d'injection 20 de façon à ce que l'orifice de sortie 25 de ce système plonge dans cette chambre.

En condition opératoire, cette chambre est, elle, alimentée avec un flux continu et de débit constant d'une phase aqueuse W₂ grâce à deux conduites 27a et 27b dont une extrémité débouche dans cette chambre et dont l'autre extrémité est raccordée à un réservoir 28 préalablement rempli de cette phase aqueuse.

Ce réservoir est avantageusement muni d'un système de chauffage (non représenté sur la figure 1) permettant de chauffer la phase aqueuse W₂ qu'il renferme à une température intermédiaire entre la température ambiante et la température à laquelle est susceptible de débuter la gélification de la phase organique des microballons liquides.

L'alimentation de la chambre 26 en phase aqueuse W₂ par les canalisations 27a et 27b est avantageusement réglée par une pompe 29 comme, par exemple, une pompe péristaltique.

Comme visible sur la figure 1, débouche également dans la chambre 26 une tubulure 30 dont une extrémité 31 est située en regard et à proximité de l'orifice de sortie 25 du système d'injection 20, et dont l'autre extrémité 32 est reliée au serpentin 4 par l'intermédiaire du raccord 3.

Ainsi, en condition opératoire, la pression exercée par la phase aqueuse W₂ circulant dans la chambre 26 sur les microballons liquides formés successivement au niveau de l'orifice de sortie 25 du système d'injection 20, a pour effet d'arracher ces microballons liquides de cet orifice au fur et à mesure qu'ils se forment et, par là même, de les mettre en suspension dans cette phase, ce qui conduit à la formation d'une émulsion triple eau dans huile dans eau.

De plus, compte tenu, d'une part, de l'alimentation continue et à débit constant de la chambre 26 avec la phase aqueuse W₂, et, d'autre part, de l'alignement de l'extrémité 31 de la tubulure 30 sur l'orifice de sortie 25 du système d'injection 20 et de la proximité existant entre cette extrémité et cet orifice, les microballons liquides ainsi arrachés sont aussitôt entraînés par le flux de phase aqueuse W₂ dans la tubulure 30 en direction du serpentin 4, tout en étant séparés les uns des autres par un volume liquide qui les empêche d'entrer en contact les uns avec les autres, que ce soit dans cette tubulure ou ultérieurement dans le raccord 3 ou le serpentin 4.

Ce serpentin est formé par un tube 40 enroulé en spirale autour d'un axe vertical 41 qui assure son maintien dans l'enceinte 5, et dont les spires sont de préférence, mais non obligatoirement, jointives, comme illustré sur la figure 1, de sorte que le serpentin puisse présenter, pour une longueur de tube donnée, une hauteur la plus réduite possible.

Le serpentin 4 comporte une entrée 42 et une sortie 43 qui sont situées à l'extérieur de l'enceinte 5, cette entrée étant reliée à la tubulure 30 de l'injecteur triphasique 2 par l'intermédiaire du raccord 3, et cette sortie étant disposée au-dessus et à proximité de l'ouverture du récipient 6.

L'enceinte 5 comporte, elle aussi, une entrée 50 et une sortie 51 qui sont reliées à un système (non représenté sur la figure 1) propre à assurer une circulation continue dans cette enceinte d'un fluide caloporteur, par exemple de l'eau, permettant de chauffer, en condition opératoire, le serpentin 4 et, par là même, l'émulsion qui y circule à la température θ choisie pour obtenir la gélification de la phase organique des microballons liquides dans ce serpentin, compte tenu du temps nécessaire à cette émulsion pour parcourir ce serpentin.

Le système assurant la circulation du fluide caloporteur dans l'enceinte 5 peut, par exemple, être un bain thermostaté à circulation du type de ceux commercialisés par la société Haake.

Bien entendu, il convient que le serpentin 4 soit réalisé en un matériau ayant de bonnes propriétés de conduction thermique. Il est, de plus, appréciable que ce matériau et celui formant l'enceinte 5 soient transparents pour permettre, en condition opératoire, un suivi de la progression de l'émulsion dans le serpentin 4. De ce fait, on préfère que ce serpentin et son enceinte soient en verre, mais d'autres matériaux comme un quartz ou un acier inoxydable sont également utilisables.

Le récipient 6, qui sert, en condition opératoire, à recueillir l'émulsion à la sortie du serpentin 4, peut être, lui, tout ustensile de contenance adaptée au volume de phase aqueuse W₂ utilisé, par exemple un bêcher, que l'on munit avantageusement d'un système d'agitation permettant de maintenir les microballons gélifiés en suspension dans cette phase.

L'utilisation du dispositif 1 pour la fabrication de microballons en mousse polymère est extrêmement simple.

En effet, après avoir déterminé la température à laquelle doit être chauffé le serpentin 4 et le temps pendant lequel l'émulsion doit séjourner dans ce serpentin pour que soit obtenue la gélification de la phase organique des microballons liquides sans démarrage des processus de dégradation de l'émulsion, on remplit le réservoir 28 de phase aqueuse W₂ et on chauffe ce réservoir ainsi que le serpentin 4 aux températures désirées.

Une fois ces températures obtenues, on déclenche l'alimentation de la chambre 26 de l'injecteur triphasique 2 en phase aqueuse W₂, dont on règle le débit en fonction du temps devant être mis par l'émulsion pour parcourir le serpentin 4.

Puis, on alimente simultanément les capillaires 21 et 22 du système d'injection 20, respectivement en phase aqueuse W₁ et en phase organique, en réglant le débit de cette alimentation en fonction de la fréquence à laquelle on souhaite que les microballons liquides se forment.

Cette injection simultanée conduit à la formation de microballons liquides au niveau de l'orifice de sortie 25 du système d'injection 20.

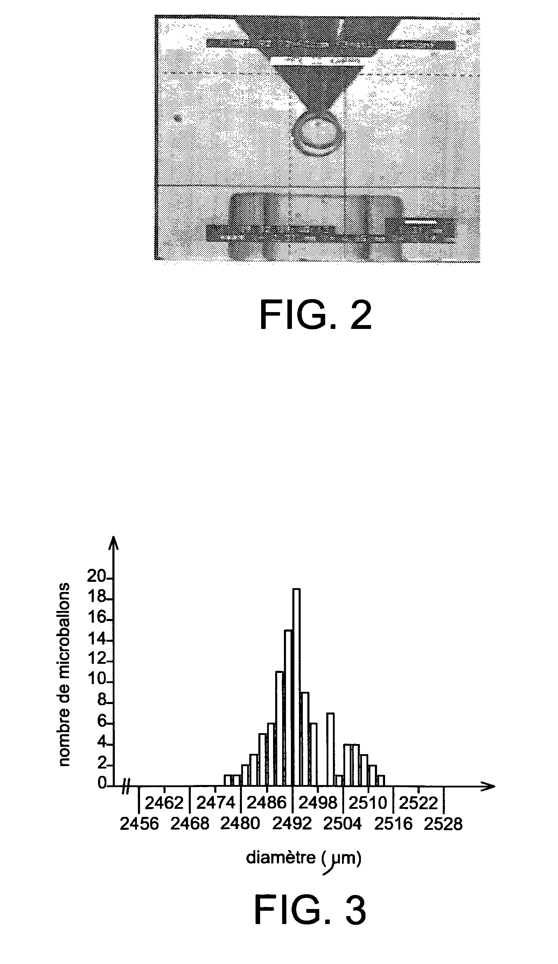

A titre d'exemple, la formation d'un microballon liquide est illustrée sur la figure 2 qui représente une image prise à l'aide d'une caméra CCD au niveau de cet orifice de sortie.

Comme précédemment expliqué, les microballons liquides sont, au fur et à mesure de leur formation, arrachés de l'orifice de sortie 25 du système d'injection 20 par la phase aqueuse W₂ circulant dans la chambre 26 de l'injecteur triphasique 2, et sont entraînés aussitôt par elle dans le serpentin 4 qu'ils parcourent, tout en étant séparés les uns des autres par un volume de phase aqueuse W₂.

A leur sortie de ce serpentin, les microballons gélifiés sont recueillis conjointement avec la phase aqueuse W₂ dans le récipient 6 où ils sont retenus, toujours en suspension dans cette phase, le temps nécessaire à l'achèvement de la réticulation et, partant, de la solidification de leur phase organique.

### Exemple 2 :

On réalise par le procédé conforme à l'invention des microballons en mousse polymère, d'un diamètre moyen souhaité de 2,5 mm et d'une densité moyenne souhaitée de 250 mg/cm⁻³, comme suit.

### 1) Préparation des phases aqueuses W₁ et W₂ et de la phase organique :

### Phase aqueuse W₁ :

Dans un erlenmeyer, on dilue de l'oxyde de deutérium (D₂O - Aldrich) dans de l'eau ultrapure, de résistivité égale à 18,2 MΩ, pour obtenir une solution présentant une teneur massique en D₂O de 8,33% et de densité égale à 1,01. Ce mélange est maintenu sous agitation jusqu'à utilisation.

### Phase aqueuse W₂ :

Dans un réacteur préalablement rempli avec 6 litres d'eau ultrapure, de résistivité égale à 18,2 MΩ, et soumis à une agitation mécanique continue (100 rpm), on introduit par petites quantités de l'alcool polyvinylique hydrolysé à 88% et de masse moléculaire égale à 25 000 g/mol (PVA - Polysciences), pour obtenir une solution présentant une teneur massique en PVA de 5%. Après dissolution complète du PVA, la solution est filtrée sur un filtre de Téflon^{®} de 0,45 µm, après quoi elle est mise sous vide permanent pendant 48 heures à 40°C. Sa densité est de 1,01.

### Phase organique :

On mélange tout d'abord du dibutylphtalate (Aldrich) et de l'éthylbenzène (Aldrich) dans un rapport volumique de 89:11 pour obtenir un solvant de densité égale à 1,02.

Puis, on introduit ce solvant dans un erlenmeyer contenant une quantité massique de triméthacrylate de triméthylolpropane (TMPTMA - Aldrich) qui est fonction de la densité de la mousse polymère que l'on souhaite obtenir. Ainsi, par exemple, pour obtenir une mousse polymère de densité sensiblement égale à 250 mg/cm³, la masse de TMPTMA doit être de 125 mg par cm³ de solution.

A ce mélange, on ajoute une quantité massique d'α,α'-azobis isobutyronitrile (AIBN - Acros Organics) correspondant à 10% de la masse du TMPTMA dissous dans le solvant, puis une quantité massique de monooléate de sorbitan (Span 80 - Aldrich) correspondant à 2,5% de la masse totale de la phase organique ainsi préparée. La solution résultante est laissée sous agitation pendant 12 heures, puis elle est dégazée à 0,25 bar durant 30 minutes juste avant utilisation.

### 2) Formation et gélification des microballons liquides et achèvement de la réticulation :

On utilise un dispositif tel que décrit ci-dessus présentant les caractéristiques suivantes :
- diamètre interne du capillaire 21 : 0,15 mm diamètre interne du capillaire 22 et de l'orifice de sortie 25 : 0,45 mm
- diamètre interne de la tubulure 30, du raccord 3 et du tube du serpentin 4 : 5 mm
- matériau du serpentin 4 : verre borosilicaté
- longueur du serpentin 4 : 11 mètres
- récipient 6 : bêcher à agitation pendulaire (25 rpm).

On utilise, par ailleurs, les conditions opératoires ci-après :
- débit de la phase aqueuse W₁ : 8 µl/minute
- débit de la phase organique : 4 µl/minute
- débit de la phase aqueuse W₂ : 100 ml/minute
- température de la phase aqueuse W₂ dans le réservoir 28 : 40°C
- température du serpentin 4 : 95°C, correspondant à un temps de demi-vie de l'AIBN d'environ 10 minutes
- temps de parcours du serpentin 4 par les microballons : 2 minutes
- durée de séjour des microballons dans le récipient 6 : ≈ 1 heure.

### 3) Lavage et séchage des microballons :

Une fois la réticulation achevée, les microballons sont lavés trois fois dans de l'eau contenant 10 g de NaCl par litre, sous agitation pendulaire (25 rpm), après quoi ils sont immergés dans de l'éthanol à 100% pendant 24 heures, toujours sous agitation pendulaire (25 rpm).

Ils sont alors répartis dans des piluliers en Téflon^{®} et ces piluliers sont placés dans un sécheur à CO₂ supercritique pendant 1 heure à 70°C et sous une pression de 90 bars.

Les microballons ainsi réalisés sont soumis à une série d'analyses visant à contrôler leur diamètre et leur circularité, l'épaisseur de leur paroi et leur concentricité, leur densité ainsi que leur structure.

Le diamètre et la circularité des microballons sont contrôlés à l'aide d'un microscope télécentrique comprenant une caméra Pulnix TM-1020 x 1020. Après étalonnage de cet appareil avec une bille étalon, chaque ballon est mesuré individuellement.

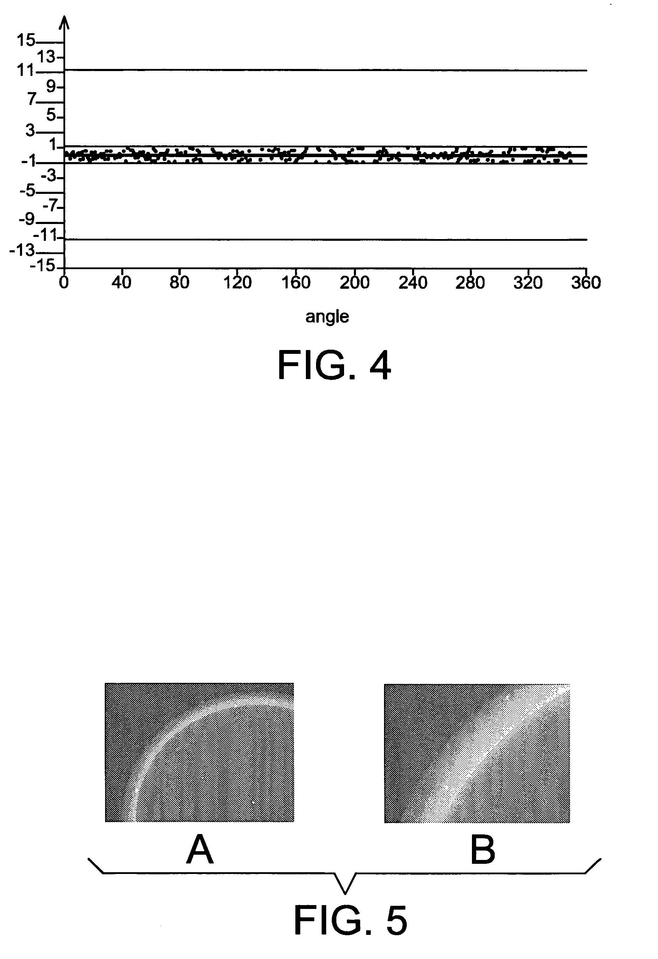

La figure 3 représente, sous la forme d'un histogramme, la distribution des microballons en fonction de leur diamètre, exprimé en microns, tandis que la figure 4 représente la courbe d'écart à la circularité de ces microballons.

Ces figures montrent que la dispersion des microballons autour du diamètre moyen souhaité (2,5 mm) est de ± 20 µm, soit une dispersion inférieure à 1%, et que la variation réelle de leur surface (point sur la courbe sur 360°) par rapport à une sphère parfaite dont le profil serait représenté par une ligne droite passant par 0 est très faible.

Après un séchage supercritique, les microballons sont opaques à la lumière visible. Aussi, les tests visant à contrôler l'épaisseur de leur paroi et leur concentricité sont-ils réalisés par radiographie aux rayons X.

La figure 5 montre deux images ainsi obtenues aux rayons X, la partie A correspondant à un grossissement de 4 X et la partie B correspondant à un grossissement de 10 X.

L'épaisseur de la paroi des microballons est mesurée à partir des radiographies à l'aide d'un microscope à haute résolution (Olympus), dix mesures étant effectuées pour chaque microballon. Ces mesures permettent de calculer une dispersion sur l'épaisseur de la paroi qui est de ± 2 µm pour une épaisseur moyenne de 112 µm, soit une concentricité de 97%.

Pour les tests de contrôle de la densité, les microballons sont pesés à l'aide d'une balance d'ultraprécision à 1 µg. Le volume des microballons est déterminé à l'aide des données précédemment recueillies à l'aide du microscope télécentrique et des radiographies aux rayons X. Ces tests montrent que les microballons présentent une densité de 240 ± 10 mg/cm⁻³.

La structure des microballons est, elle, contrôlée à l'aide d'un microscope à balayage électronique (MEB de marque LEO, modèle 1525).

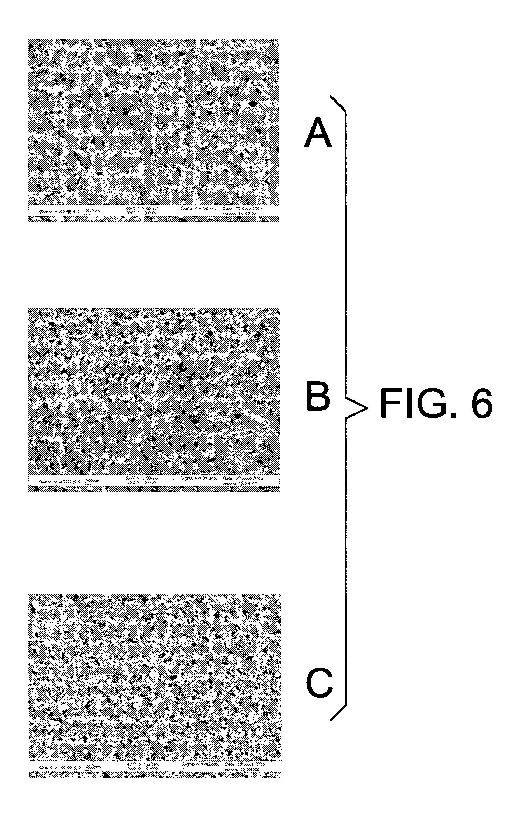

La figure 6 représente trois images ainsi obtenues sur un microballon, à un grossissement de 40 000 X, la partie A correspondant à la surface externe de la paroi de ce microballon, la partie B correspondant à la paroi vue en coupe transversale, et la partie C à la surface interne de cette paroi.

Ces images mettent en évidence qu'il existe une bonne homogénéité de structure entre les surfaces interne, externe et la paroi des microballons.

L'invention ne se limite pas aux modes de réalisation et de mise en oeuvre qui viennent d'être expressément décrits. En particulier, il est tout à fait possible de réaliser des microbilles en mousse polymère au moyen d'un dispositif et par un procédé analogues à ceux décrits ci-avant, étant entendu que dans ce cas on n'utilise pas de phase aqueuse W₁ et qu'il suffit de disposer d'un injecteur biphasique au lieu de l'injecteur triphasique 2.

## Revendications

1. Procédé de fabrication de billes ou de ballons en mousse polymère, comprenant les étapes suivantes :
a) former des billes liquides avec une phase organique, ou des ballons liquides par encapsulation d'une phase aqueuse W₁ dans une phase organique, cette phase organique comprenant au moins un monomère réticulable et un amorceur de polymérisation en solution dans un solvant organique non miscible à l'eau ;
b) former une émulsion en mettant les billes ou les ballons liquides en suspension dans une phase aqueuse W₂ ;
c) soumettre l'émulsion ainsi formée à une température θ qui est au moins égale à la température à laquelle l'amorceur de polymérisation présente un temps de demi-vie de décomposition de 5 à 15 minutes, mais qui est inférieure à la température de dégradation de la phase organique, le temps nécessaire pour obtenir la gélification de cette phase organique ; et
d) achever la solidification de la phase organique desdites billes ou desdits ballons.

2. Procédé selon la revendication 1, dans lequel l'étape c) est réalisée en faisant circuler l'émulsion dans un conduit (4) chauffé à la température θ.

3. Procédé selon la revendication 1 ou la revendication 2, dans lequel, à l'étape b), les billes ou les ballons liquides sont mis en suspension dans la phase aqueuse W₂ tout en étant séparés les uns des autres par un volume de phase aqueuse W₂.

4. Procédé selon la revendication 3, dans lequel, à l'étape c), les billes ou les ballons liquides en suspension dans la phase aqueuse W₂ sont maintenus séparés les uns des autres par un volume de phase aqueuse W₂.

5. Procédé selon l'une quelconque des revendications précédentes, dans lequel, à l'étape a) les billes ou les ballons liquides sont formés en ordre successif au niveau de l'orifice de sortie (25) d'un système d'injection (20), tandis qu'à l'étape b), ils sont mis en suspension dans la phase aqueuse W₂ par arrachage de cet orifice, au fur et à mesure de leur formation, au moyen d'un flux de phase aqueuse W₂ de débit constant.

6. Procédé selon la revendication 5, dans lequel l'étape c) est réalisée en faisant circuler l'émulsion résultant de l'arrachage desdites billes ou desdits liquides par le flux de phase aqueuse W₂ dans un conduit chauffé à la température θ.

7. Procédé selon la revendication 2 ou la revendication 6, dans lequel l'étape d) est réalisée dans un récipient (6) dans lequel se déverse l'émulsion après avoir parcouru ledit conduit (4).

8. Procédé selon l'une quelconque des revendications précédentes, qui comprend, de plus, après l'étape d), une étape de lavage et une étape de séchage des billes ou des ballons.

9. Procédé selon la revendication 8, dans lequel on procède, entre les étapes de lavage et de séchage, au remplacement du solvant organique présent dans la paroi des billes ou des ballons par un solvant plus volatile que l'eau.

10. Procédé selon la revendication 9, dans lequel, pour la fabrication de ballons, on remplace de plus la phase aqueuse W₁ présente dans les ballons par le solvant plus volatile que l'eau.

11. Procédé selon l'une quelconque des revendications précédentes, dans lequel le séchage des billes ou des ballons est réalisé au CO₂ supercritique.

12. Procédé selon l'une quelconque des revendications précédentes, dans lequel, pour la fabrication de billes, la phase aqueuse W₂ présente une densité supérieure de 1% au plus à la densité de la phase organique.

13. Procédé selon l'une quelconque des revendications 1 à 11, dans lequel, pour la fabrication de ballons, la phase aqueuse W₂ présente une densité supérieure de 1% au plus à la densité de l'ensemble formé par la phase organique et phase aqueuse W₁, tandis que la phase organique présente une densité supérieure de 1% au plus à la densité de la phase aqueuse W₁.

14. Procédé selon l'une quelconque des revendications précédentes, dans lequel la polymérisation du ou des monomères réticulables présents dans la phase organique est de type radicalaire.

15. Procédé selon la revendication 14, dans lequel sont le ou les monomères réticulables sont choisis parmi les acrylates et les méthacrylates multifonctionnels.

16. Procédé selon la revendication 13 ou la revendication 15, dans lequel l'amorceur de polymérisation est choisi parmi les amorceurs de polymérisation radicalaire de type azo solubles dans les solvants organiques.

17. Application d'un procédé tel que défini dans l'une quelconque des revendications 1 à 16 à la fabrication de microballons en mousse polymère.

18. Application selon la revendication 17, dans laquelle les microballons sont destinés à la réalisation de cibles pour l'étude de la fusion par confinement inertiel.

19. Dispositif (1) spécialement conçu pour la mise en oeuvre d'un procédé selon l'une quelconque des revendications 1 à 16, comprenant :
- un système d'injection (20) comportant une ou plusieurs entrées (21, 23) pour son alimentation en phase organique et éventuellement en phase aqueuse W₁, et un orifice de sortie (25) pour la formation des billes ou les ballons liquides ;
- une chambre fermée (26) dans laquelle est logé l'orifice de sortie (25) du système d'injection (20), cette chambre comportant une ou plusieurs entrées pour son alimentation en phase aqueuse W₂ et une sortie (30) pour l'évacuation hors de cette chambre de l'émulsion résultant de la mise en suspension des billes ou des ballons liquides dans cette phase aqueuse W₂ ;
- un serpentin (4) pour soumettre l'émulsion à la température θ, ce serpentin comportant une entrée (42) reliée à la sortie de la chambre et une sortie (43), et étant muni de moyens (5) de chauffage ; et
- des moyens (6) pour réceptionner l'émulsion à la sortie dudit serpentin.

20. Dispositif selon la revendication 19, dans lequel le serpentin (4) est formé par un tube (40) enroulé en spirale autour d'un axe vertical (41), et dont les spires sont, de préférence, jointives.

21. Dispositif selon la revendication 19 ou la revendication 20, dans lequel la sortie (30) de la chambre est constituée d'une tubulure dont une extrémité (31) est située en regard et à proximité de l'orifice de sortie du système d'injection, et dont l'autre extrémité (32) est reliée au serpentin.

22. Dispositif selon l'une quelconque des revendications 19 à 21, dans lequel le serpentin (4) est logé dans une enceinte fermée (5) munie d'une entrée (50) et d'une sortie (51) pour son alimentation avec un fluide caloporteur.

23. Dispositif selon la revendication 22, dans lequel le serpentin (4) et l'enceinte (5) sont en verre.

## Claims

1. A method for manufacturing polymer foam beads or balloons, comprising the following steps:
a) forming liquid beads with an organic phase, or liquid balloons by encapsulating an aqueous phase W₁ in an organic phase, this organic phase comprising at least one crosslinkable monomer and one initiator for polymerization in solution in an organic solvent immiscible with water;
b) forming an emulsion by suspending the liquid beads or balloons in an aqueous phase W₂;
c) subjecting the emulsion thus formed to a temperature 0 that is at least equal to the temperature at which the polymerization initiator has a decomposition half-life of 5 to 15 minutes, but that is lower than the degradation temperature of the organic phase, for the time required for this organic phase to gel; and
d) completing the solidification of the organic phase of said beads or balloons.

2. The method as claimed in claim 1, in which step c) is carried out by making the emulsion flow in a duct (4) heated to the temperature θ.

3. The method as claimed in claim 1 or claim 2, in which, in step b), the liquid beads or balloons are suspended in the aqueous phase W₂ while being separated from each other by an aqueous phase W₂ volume.

4. The method as claimed in claim 3, in which, in step c), the liquid beads or balloons in suspension in the aqueous phrase W₂ are kept separate from each other by an aqueous phase W₂ volume.

5. The method as claimed in any one of the preceding claims, in which, in step a), the liquid beads or balloons are formed in successive order at the outlet orifice (25) of an injection system (20), whereas in step b), they are suspended in the aqueous phase W₂ by extraction from this orifice, as they are being formed, by means of an aqueous phase W₂ stream having a constant flow rate.

6. The method as claimed in claim 5, in which step c) is carried out by making the emulsion resulting from the extraction of said beads or said liquids flow via the aqueous phase W₂ stream in a duct heated to the temperature θ.

7. The method as claimed in claim 2 or claim 6, in which step d) is carried out in a container (6) into which the emulsion pours out after having traveled through said duct (4).

8. The method as claimed in any one of the preceding claims, which comprises, in addition, after step d), a step of washing and a step of drying the beads or balloons.

9. The method as claimed in claim 8, in which, between the washing and drying steps, the organic solvent present within the wall of the beads or balloons is replaced with a solvent that is more volatile than water.

10. The method as claimed in claim 9, in which, for manufacturing balloons, the aqueous phase W₁ present in the balloons is also replaced with the solvent that is more volatile than water.

11. The method as claimed in any one of the preceding claims, in which drying of the beads or balloons is carried out with supercritical CO₂.

12. The method as claimed in any one of the preceding claims, in which, for manufacturing beads, the aqueous phase W₂ has a density that is at most 1% greater than the density of the organic phase.

13. The method as claimed in any one of claims 1 to 11, in which, for manufacturing balloons, the aqueous phase W₂ has a density that is at most 1% greater than the density of the group formed by the organic phase and aqueous phase W₁, while the organic phase has a density that is at most 1% greater than the density of the aqueous phase W₁.

14. The method as claimed in any one of the preceding claims, in which the polymerization of the crosslinkable monomer(s) present in the organic phase is of radical type.

15. The method as claimed in claim 14, in which the crosslinkable monomer(s) is(are) chosen from multifunctional acrylates and methacrylates.

16. The method as claimed in claim 13 or claim 15, in which the polymerization initiator is chosen from azo-type radical polymerization initiators that are soluble in organic solvents.

17. An application of a method as defined in any one of claims 1 to 16 for manufacturing polymer foam microballoons.

18. The application as claimed in claim 17, in which the microballoons are intended for producing targets for the study of inertial confinement fusion.

19. A device (1) specially designed for implementing a method as claimed in any one of claims 1 to 16, comprising:
- an injection system (20) comprising one or more inlets (21, 23) for supplying it with organic phase and optionally with aqueous phase W₁, and an outlet orifice (25) for forming the liquid beads or balloons;
- a closed chamber (26) in which the outlet ori fice (25) of the injection system (20) is housed, this chamber comprising one or more inlets for supplying it with aqueous phase W₂ and an outlet (30) for evacuating from this chamber the emulsion resulting from the suspension of the liquid beads or balloons in this aqueous phase W₂;
- a coil (4) for subjecting the emulsion to the temperature θ, this coil comprising an inlet (42) connected to the chamber outlet and an outlet (43), and being equipped with heating means (5); and
- means (6) for receiving the emulsion at the outlet of said coil.

20. The device as claimed in claim 19, in which the coil (4) is formed by a tube (40) wound spirally around a vertical axis (41), the turns of which are preferably touching.

21. The device as claimed in claim 19 or claim 20, in which the outlet (30) of the chamber is composed of tubing of which one end (31) is located opposite and close to the outlet orifice of the injection system, and of which the other end (32) is connected to the coil.

22. The device as claimed in any one of claims 19 to 21, in which the coil (4) is housed within a closed chamber (5) equipped with an inlet (50) and an outlet (51) for supplying it with a heat transfer fluid.

23. The device as claimed in claim 22, in which the coil (4) and the chamber (5) are made of glass.

## Patentansprüche

1. Verfahren zur Herstellung von Kügelchen oder Ballons aus Polymerschaum, umfassend die folgenden Schritte:
a) Bilden von flüssigen Kügelchen mit einer organischen Phase oder von flüssigen Ballons durch Einkapselung einer wässrigen Phase W₁ in einer organischen Phase, wobei diese organische Phase wenigstens ein vernetzbares Monomer und einen Polymerisationsstarter in Lösung in einem mit Wasser nicht mischbaren organischen Lösungsmittel umfasst;
b) Bilden einer Emulsion, indem man die Kügelchen oder die flüssigen Ballons in Suspension in eine wässrige Phase W₂ bringt;
c) Bringen der derart gebildeten Emulsion auf eine Temperatur θ die wenigstens gleich der Temperatur ist, bei der der Polymerisationsstarter eine Zerfalls-Halbwertszeit von 5-15 Minuten aufweist, die jedoch kleiner als die Zersetzungstemperatur der organischen Phase ist, für die benötigte Zeit, um die Gelierung dieser organischen Phase zu erzielen; und
d) Erreichen der Verfestigung der organischen Phase der Kügelchen oder der Ballons.

2. Verfahren nach Anspruch 1, bei dem der Schritt c) realisiert wird, indem man die Emulsion in einer Leitung (4) zirkulieren lässt, die auf die Temperatur θ erhitzt ist.

3. Verfahren nach Anspruch 1 oder 2, bei dem im Schritt b) die Kügelchen oder die flüssigen Ballons in Suspension in die wässrige Phase W₂ gebracht werden, während sie voneinander durch ein Volumen der wässrigen Phase W₂ getrennt sind.

4. Verfahren nach Anspruch 3, bei dem im Schritt c) die Kügelchen oder die flüssigen Ballons in Suspension in der wässrigen Phase W₂ durch ein Volumen der wässrigen Phase W₂ voneinander getrennt gehalten werden.

5. Verfahren nach einem der vorhergehenden Ansprüche, bei dem im Schritt a) die Kügelchen oder die flüssigen Ballons in sukzessiver Reihenfolge im Bereich der Ausgangsöffnung (25) eines Einspritzsystems (20) gebildet werden, während sie im Schritt b) im Verlauf ihrer Bildung nach und nach mittels eines Stroms der wässrigen Phase W₂ mit konstanter Rate durch Herausziehen aus dieser Öffnung in Suspension in die wässrige Phase W₂ gebracht werden.

6. Verfahren nach Anspruch 5, bei dem der Schritt c) realisiert wird, indem man die Emulsion, die aus dem Herausziehen der Kügelchen oder der Flüssigkeiten durch den Strom der wässrigen Phase W₂ resultiert, in einer Leitung zirkulieren lässt, die auf die Temperatur θ erhitzt ist.

7. Verfahren nach Anspruch 2 oder 6, bei dem der Schritt d) in einem Behälter (6) realisiert wird, in dem sich die Emulsion verbreitet, nachdem sie die Leitung (4) durchlaufen hat.

8. Verfahren nach einem der vorhergehenden Ansprüche, welches ferner nach dem Schritt d) einen Schritt des Waschens und einen Schritt des Trocknens der Kügelchen oder der Ballons umfasst.

9. Verfahren nach Anspruch 8, bei dem man zwischen den Schritten des Waschens und des Trocknens eine Ersetzung des organischen Lösungsmittels, das in der Wand der Kügelchen oder der Ballons vorhanden ist, durch ein Lösungsmittel vornimmt, das volatiler ist als Wasser.

10. Verfahren nach Anspruch 9, bei dem man zur Herstellung der Ballons ferner die wässrige Phase W₁, die in den Ballons vorhanden ist, durch das Lösungsmittel ersetzt, das volatiler ist als Wasser.

11. Verfahren nach einem der vorhergehenden Ansprüche, bei dem das Trocknen der Kügelchen oder der Ballons mit überkritischem CO₂ realisiert wird.

12. Verfahren nach einem der vorhergehenden Ansprüche, bei dem die wässrige Phase W₂ zur Herstellung der Kügelchen eine Dichte aufweist, die höchstens 1 % größer als die Dichte der organischen Phase ist.

13. Verfahren nach einem der Ansprüche 1 bis 11, bei dem zur Herstellung von Ballons die wässrige Phase W₂ eine Dichte aufweist, die höchstens 1 % größer ist als die Dichte der durch die organische Phase und die wässrige Phase W₁ gebildeten Gesamtheit, wohingegen die organische Phase eine Dichte aufweist, die höchstens 1 % größer ist als die Dichte der wässrigen Phase W₁

14. Verfahren nach einem der vorhergehenden Ansprüche, bei dem die Polymerisation des oder der in der organischen Phase vorhandenen vernetzbaren Monomers/Monomere vom radikalischen Typ ist.

15. Verfahren nach Anspruch 14, bei dem das oder die vernetzbare(n) Monomer(e) ausgewählt ist/sind aus den Acrylaten und den multifunktionalen Methacrylaten.

16. Verfahren nach Anspruch 13 oder Anspruch 15, bei dem der Polymerisationsstarter ausgewählt ist aus den radikalischen Polymerisationsstartern vom Azo-Typ, die in den organischen Lösungsmitteln löslich sind.

17. Verwendung eines Verfahrens, wie es in einem der Ansprüche 1 bis 16 definiert ist, für die Herstellung von Mikroballons aus Polymerschaum.

18. Verwendung nach Anspruch 17, bei der die Mikroballons zur Realisierung von Zielen für das Studium der Fusion mittels Trägheitseinschluss bestimmt sind.

19. Vorrichtung (1), die speziell für die Durchführung eines Verfahrens nach einem der Ansprüche 1 bis 16 ausgelegt ist, umfassend:
- ein Einspritzsystem (20), umfassend einen oder mehrere Eingänge (21, 23) für seine Versorgung mit einer organischen Phase und gegebenenfalls einer wässrigen Phase W₁, sowie eine Ausgangsöffnung (25) zur Bildung von Kügelchen oder flüssigen Ballons;
- eine geschlossene Kammer (26), in welcher die Ausgangsöffnung (25) des Einspritzsystems (2) aufgenommen ist, wobei diese Kammer einen oder mehrere Eingänge für ihre Versorgung mit der wässrigen Phase W₂ sowie einen Ausgang (30) umfasst, um die Emulsion aus der Kammer abzulassen, die aus dem In-Suspension-Bringen der Kügelchen oder der flüssigen Ballons in diese wässrige Phase W₂ resultiert;
- eine Rohrschlange (4), um die Emulsion auf die Temperatur θ zu bringen, wobei diese Rohrschlange einen Eingang (42) umfasst, der mit dem Ausgang der Kammer verbunden ist, sowie einen Ausgang (43), und mit einer Heizeinrichtung (5) ausgestattet ist; und
- eine Einrichtung (6) zum Auffangen der Emulsion am Ausgang der Rohrschlange.

20. Vorrichtung nach Anspruch 19, bei der die Rohrschlange (4) durch ein Rohr (4) gebildet ist, das spiralförmig um eine vertikale Achse (41) gewickelt ist, und dessen Spiralwindungen vorzugsweise aneinandergesetzt sind.

21. Vorrichtung nach Anspruch 19 oder Anspruch 20, bei der der Ausgang (30) der Kammer durch einen Stutzen gebildet ist, dessen eines Ende (31) gegenüber und in Nähe der Ausgangsöffnung des Einspritzsystems angeordnet ist, und dessen anderes Ende (32) mit der Rohrschlange verbunden ist.

22. Vorrichtung nach einem der Ansprüche 19 bis 21, bei der die Rohrschlange (4) in einem geschlossenen Behälter (5) aufgenommen ist, der mit einem Eingang (50) und einem Ausgang (51) zu seiner Versorgung mit einem wärmetragenden Fluid ausgestattet ist.

23. Vorrichtung nach Anspruch 22, bei der die Rohrschlange (4) und der Behälter (5) aus Glas sind.
